Europäisches Patentamt

European Patent Office

Office européen des brevets

(19)

(11) **EP 1 042 629 B1**

(12) **EUROPÄISCHE PATENTSCHRIFT**

(45) Veröffentlichungstag und Bekanntmachung des Hinweises auf die Patenterteilung:
**13.11.2002   Patentblatt 2002/46**

(51) Int Cl.⁷: $F16L\ 9/127$

(21) Anmeldenummer: **98966683.9**

(86) Internationale Anmeldenummer:
**PCT/EP98/08487**

(22) Anmeldetag: **29.12.1998**

(87) Internationale Veröffentlichungsnummer:
**WO 99/035430 (15.07.1999 Gazette 1999/28)**

(54) **POLYPROPYLENFORMMASSE MIT HOHER FESTIGKEIT**

HIGH RESISTANCE POLYPROPYLENE MASS

MASSE EN POLYPROPYLENE A RESISTANCE ELEVEE

(84) Benannte Vertragsstaaten:
**DE ES FR GB IT PT SE**

(30) Priorität: **30.12.1997   DE 19758124**

(43) Veröffentlichungstag der Anmeldung:
**11.10.2000   Patentblatt 2000/41**

(73) Patentinhaber: **Borealis GmbH**
**2323 Schwechat-Mannswörth (AT)**

(72) Erfinder:
• **EBNER, Karl**
  **A-4540 Bad Hall (AT)**

• **KONRAD, Roland**
  **A-4040 Linz (AT)**
• **SCHIESSER, Stefan**
  **A-4060 Leonding (AT)**
• **BERNREITNER, Klaus**
  **A-4020 Linz (AT)**

(74) Vertreter: **Schinke, Herbert, Dr. Dr.,**
**Patentanwaltskanzlei**
**Postfach 11 11**
**06234 Leuna (DE)**

(56) Entgegenhaltungen:
**EP-A- 0 597 461        EP-A- 0 670 349**
**EP-A- 0 735 304**

EP 1 042 629 B1

Anmerkung: Innerhalb von neun Monaten nach der Bekanntmachung des Hinweises auf die Erteilung des europäischen Patents  kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Polypropylenrohr mit hoher Festigkeit, insbesondere hohem Zug-Elastizitätsmodul, hoher Kerbschlagzähigkeit, Ringsteifigkeit und Widerstand gegen Schlagbeanspruchung.

Die Rohre sind vor allem für den Einsatz in Abwasserrohrsystemen, insbesondere als Kanalrohre, bestimmt.

Es ist seit langem bekannt, für den Bau von Abwasserkanälen Rohre aus Steinzeug, Beton und Gußeisen zu verwenden. Von Nachteil ist die Bruchanfälligkeit dieser starren Materialien, so daß daraus gefertigte Rohre durch äußere Einflüsse. wie Erdbewegungen. Verlegefehler und andere Belastungen häufig reißen und austretendes Sickerwasser ökologische Schäden im umgebenden Erdreich und Grundwasser verursacht.

Besonders vorteilhaft ist dagegen der Einsatz von Kanalrohren aus thermoplastischen Kunststoffen, die in bekannter Weise durch Extrusion in unterschiedlichen Abmessungen hergestellt werden. Vorzugsweise Polyethylen und Polypropylen sind mit ihrem geringeren Gewicht, guter thermoplastischer Verschweißbarkeit sowie hoher Bruchzähigkeit, Korrosions- und Abrasionsbeständigkeit den anderen Rohrwerkstoffen überlegen und gewährleisten über lange Zeiträume eine hohe Funktionssicherheit von Abwasser-Kanalsystemen. Weitere Gründe für die zunehmende Bedeutung dieser Werkstoffe im Rohrsektor bestehen in deren Umweltverträglichkeit, geringem Verlegeaufwand und problemlosen Recycling.

In mehreren Normen und Normentwürfen sind dem Stand der Technik entsprechende Festlegungen über die Dimensionierung, Materialeigenschaften, Prüfverfahren und den Einsatz von Kunststoff-Rohrleitungen in Abwasser-Entsorgungsanlagen enthalter z.B EN 1852, pr EN 1401. CEN/TC 155 WI 009 Dok. 155/13 N322. DIN 19537 DIN 16961. DIN V 19534-1 und Entwurf DIN 19566.

Die Errichtung sehr leistungsfähiger Abwasser-Entsorgungssysteme sowie die Durchführung von Verlegungs- und Sanierungsarbeiten bei niedrigen Außentemperaturen setzen jedoch neue Werkstoffe mit noch höheren Gebrauchswerteigenschaften voraus. Aktuelle Forderungen betreffen insbesondere stabile Kunststoffrohre großen Durchmessers mit einsatzgerechter Festigkeit, Tieftemperaturzähigkeit und Einsatztemperaturen bis 90 °C.

Es sind Verfahren bekannt, die Festigkeit von Polypropylenrohren durch Verbundbildung zu erhöhen. Nach DE 94 16 759 U1 sowie DE 296 12 040 U1 werden die Rohre mit festem Fadenmaterial oder Verstärkungsgeflecht umwickelt und anschliessend mit Kunststoff oder einem Außenrohr ummantelt. EP 0 762 032 beschreibt ein Extrusionsverfahren zur Herstellung von mehrschichtigen Verbundrohren. Innen- und Außenwand derselben bestehen aus unterschiedlichen Polymermaterialien, die vor der Verarbeitung mit Haftvermittler und Füllstoff modifiziert werden.

Diese Verfahren bewirken eine erhöhte Druck- und Temperaturfestigkeit der Verbundrohre gegenüber unverstärktem Rohr. Nachteilig ist aber der hohe Fertigungsaufwand in Form mehrerer Arbeitsschritte, unterschiedlicher Einsatzmaterialien sowie die durch den Verbundaufbau bedingte Gewichtserhöhung.

Nach EP 0 385 465 führt die wellenförmige Gestaltung der Außenwand von Abwasser-Kanalrohren zu einer erhöhten Ringsteifigkeit. Davon ausgehend beschreibt das Verfahren die Fertigung von Verbunden aus einem glatten Innenrohr und einem gewellten Außenrohr.

Dem vorteilhaften Gewinn an Ringsteifigkeit bei Doppelrohren mit außenliegendem Profil stehen auch hier ein aufwendiges Herstellungsverfahren das hohe Gewicht der Doppelrohre und eine komplizierte Rohrverbindungstechnik als Nachteile gegenüber

In der Patentliteratur sind weiterhin Verfahren zur Erhöhung der Steifigkeit und Zahigkeit von Polypropylen bekannt Insbesondere werden durch Zumischung von Elastomeren (WO 96/37549, DE 40 19 456), die Verbreiterung der Molmassenverteilung (WO 96/11216, DE 43 30 661), die Erzeugung von Reaktorblends (DE 40 01 157) sowie den Zusatz von Nukleiermitteln (DE 44 07 327) Wege beschrieben, die zwar Teillösungen darstellen, aber nicht zu Steifigkeits-Zähigkeits-Relationen entsprechend den aktuellen Forderungen an leistungsfähiges Rohrmaterial führen.

Der vorliegenden Erfindung liegt die Aufgabe zugrunde, unter Beachtung der gestiegenen Einsatzforderungen an Rohrmaterialien eine Polypropylen-Formmasse zu schaffen, die gleichzeitig einen sehr hohen Zug-E-Modul, Steifigkeit und Zähigkeit aufweist und hinsichtlich ihrer rheologischen Eigenschaften sowie des Materialeinsatzes vorteilhaft zu Rohr extrudiert werden kann.

Obwohl der entgegengesetzte Verlauf von Steifigkeit und Zähigkeit der Eigenschaftsverbesserung mehrphasiger Polypropylenblends Grenzen setzt, konnten aus Propylen und Ethylen unter Verwendung von ZIEGLER-NATTA-Katalysatoren in einem zweistufigen Polymerisationsverfahren Formmassen entwickelt werden, aus denen durch Extrusion Rohre herstellbar sind, deren mechanische Festigkeit wesentlich verbessert ist gegenüber den bekannten und vergleichbaren Rohrmaterialien aus Kunststoff.

Der Erfindungsgegenstand ist eine Polypropylenformmasse zur Extrusion von Rohren mit hoher Festigkeit, hohem Zug-E-Modul und hoher Zähigkeit

einem Zug-E-Modul von 1300 bis 2300 N/mm$^2$, bevorzugt 1500 bis 2000 N/mm$^2$, und
einer Kerbschlagzähigkeit von 60 bis 110 kJ/m$^2$, bevorzugt 70 bis 100 kJ/m$^2$,
die aus zwei Komponenten A und B der Zusammensetzung

A) 80 bis 98 Masseteile, bevorzugt 87 bis 97 Masseteile, eines isotaktischen Polypropylen-Homopolymerisates als kohärente Matrixkomponente mit einer Dekadenregularität von > 95 % und

B) 2 bis 20 Masseteile, bevorzugt 3 bis 13 Masseteile, eines Copolymerisats, bestehend aus 50 bis 70 Masseteilen Propylen und 30 bis 50 Masseteilen Ethylen und/oder weiterer C4 - C8 -$\alpha$-Olefine als dispers verteilte Elastkomponente

mit einem Verhältnis der intrinsischen Viskositäten beider Komponenten B/A von 0.9 bis 1.5 sowie einen Schmelzindex der Formmasse von 0,15 bis 0.8 g/10 min. bevorzugt 0,2 bis 0,5 g/10 min, besteht.

Die Masseteile B eines Copolymerisats bestehen bevorzugt aus 55 bis 65 Masseteilen Propylen und 35 bis 45 Masseteilen Ethylen.

Der hohe Zug-E-Modul und die hohe Kerbschlagzähigkeit haben zur Folge, daß die für Rohre besonders wichtige Ringsteifigkeit ebenfalls erhöht ist.

Die Erfindung ist deshalb auch durch ein Polypropylenrohr, hergestellt durch Extrusion einer Polypropylen Formmasse, gekennzeichnet, wobei die Ringsteifigkeit SN [kN/m$^2$] der Vollwandrohre mit glattwandiger Innen- und Außenoberfläche, und zwar unabhängig von der Gestaltungsform der jeweiligen Rohrenden, mit einem Außendurchmesser von $\geq$ 20 mm bis zu einem Außendurchmesser von $\leq$ 2000 mm die mathematische Beziehung

$$190 \text{ kN/m}^2 \cdot (10/(SDR\text{-}1))^3 \geq SN \geq 110 \text{ kN/m}^2 \cdot (10/(SDR\text{-}1))^3,$$

vorzugsweise für die Zahlenwerte 162 und 137 kN/m$^2$
(anstelle 190 und 110 kN/m$^2$),
erfüllt, wobei SDR das Verhältnis von Außendurchmesser zur Wanddicke darstelit

Bei einem Rohr mit den Abmessungen Rohraußendurchmesser 110 mm und Rohrwanddicke 3,7 mm bedeutet dies, daß die Ringsteifigkeit, gemessen entsprechend ISO 9969 bei 23 °C, einen Wert von etwa 6,5 bis 7,0 kN/m$^2$ aufweist.

Bei Polypropylenrohren mit beliebiger Ausgestaltung der Rohrwandung mit einem Außendurchmesser $\geq$ 40 mm bis zu einem Außendurchmesser von $\leq$ 4000 mm sollte die mathematische Beziehung

$$2.3 \cdot 10^6 \text{ kN/m}^2 \cdot W \geq SN \geq 1,3 \cdot 10^6 \text{ kN/m}^2 \cdot W,$$

vorzugsweise für die Zahlenwerte 1,95 und 1,65 $\cdot$ 10$^6$ kN/m$^2$
(anstelle 2,3 und 1,3 $\cdot$ 10$^6$ kN/m$^2$), gelten, wobei W das Verhältnis des längenbezogenen Flächenträgheitsmomentes der Rohrwandung zur dritten Potenz des Schwerpunktdurchmessers darstellt.

Dies betrifft insbesondere Rohre mit einer sandwichartigen Rohrwandung, Rohre mit einer Rohrwandung mit Hohlwandaufbau mit längsverlaufenden Hohlräumen, Rohre mit Hohlwandaufbau mit spiralförmigen Hohlräumen, Rohre mit glatter Innenoberfläche und kompakter oder hohler, spiralförmiger oder ringförmig gerippter Außenoberfläche, unabhängig von der Gestaltungsform der jeweiligen Rohrenden.

Als Folge der guten Festigkeitseigenschaften weisen diese Rohre bei der Messung des Widerstandes gegen äußere Schlagbeanspruchung unter den folgenden Standardbedingungen keinen Bruch auf.

Zur Beurteilung des Bruchverhaltens von Kunststoff-Rohren wird die Prüfmethode "Widerstandsfähigkeit gegen äußere Schlagbeanspruchung" in zwei Verfahrensvarianten unter standardisierten Bedingungen angewendet.

Nach dem Umfangsverfahren gemäß EN 744 werden Rohrabschnitte dem Schlag eines Fallgewichtes ausgesetzt. das aus einer festgelegten Hohe auf uber den Umfang verteilte Stellen fällt. Bei Auftreten von Rohrbruch wird die Schlagzähigkeitsbruchrate ermittelt. Die Messung erfolgt bei 0 °C, wobei die Masse und die Fallhöhe des Fallgewichtes vom Außendurchmesser des geprüften Rohres abhängen und als Standardbedingungen bzw. Prüfparameter in der Norm festgelegt sind. Zum Beispiel gelten für ein Rohr mit dem Außendurchmesser 110 mm folgende Prüfparameter:

- Temperatur      0 °C
- Masse des Fallgewichtes      1,0 kg
- Fallhöhe des Fallgewichtes      1600 mm.

Für Kunststoffrohre, die bei Temperaturen unterhalb -10 °C verlegt werden, ist zusätzlich die Prüfung nach dem Stufenverfahren gemäß EN 1411 erforderlich. Danach werden die zu prüfenden Rohrabschnitte jeweils einem Schlag eines Fallhammers festgelegter Masse und Form ausgesetzt, wobei die Schläge eine Folge aus unterschiedlichen Fallhöhen bilden. Erfolgt Rohrbruch, so wird die Fallhöhe als H50-Wert ermittelt. bei der 50 % der Probekörper der untersuchten Rohrprobe versagen. Die Norm legt in Abhängigkeit vom Rohraußendurchmesser die Prüfparameter Temperatur, Masse und Fallhöhe des Fallgewichtes fest.

Für ein Rohr mit dem Außendurchmesser 110 mm gelten folgende Standard-Meßbedingungen:

- Temperatur         0 °C
- Masse des Fallgewichtes         4 kg
- Fallhöhe des Fallgewichtes         ≥ 1 m.

Weiterhin können der thermoplastischen Formmasse aus der das Polypropylen-Rohr hergestellt wird. zwecks Verbesserung der verarbeitungs- und anwendungstechnischen Eigenschaften übliche Additive. wie Thermostabilisatoren. Antioxidantien und/oder Lichtschutzmittel. Antistatika, Gleit- und Entformungsmittel Pigmente/Farbstoffe. Metalldesaktivatoren. Nukleierungsmittel, Füll-und Verstärkungsstoffe. Flammschutzmittel in den für diese Zusatzstoffe üblichen Konzentrationen hinzugesetzt werden.

Vorzugsweise enthält das polymere Rohrmaterial 0,01 bis 2,0 Masse% eines oder mehrerer Nukleiermittel.

Bei der Herstellung der Rohre wird so verfahren, daß die zur Rohrfertigung verwendete thermoplastische Formmasse aus Propylen und Ethylen in einem zweistufigen Polymerisationsverfahren unter Verwendung stereospezifischer ZIEGLER-NATTA-Katalysatoren und Zudosierung von Wasserstoff und unter Vorschaltung einer Prepolymerisation

A) durch Polymerisation der Propylene bei Temperaturen von 50 bis 90 °C und Drücken von 20 bis 50 bar und
B) durch Polymerisation des Gemisches aus diesen Polypropylen-homopolymerisaten und neu zugesetzten Propylen und Ethylen und/oder weiterer $C_4$-$C_8$-$\alpha$-Olefinen bei Temperaturen von 40 bis 100 °C und Drücken von 5 bis 30 bar

hergestellt wird. die durch Extrusion zu Rohren unterschiedlichen Durchmessers mit unterschiedlicher Form der Rohrwandung verarbeitet werden.

Die Polymerisation erfolgt zweistufig in zwei in Reihe geschalteten Polymerisations-Reaktoren. Dem ersten Reaktor ist eine Prepolymerisation vorgeschaltet. Das Prepolymer wird beispielsweise in einen LOOP-Reaktor überführt und anschließend die Polymerisation in Flüssigpropylen-Überschuß durchgeführt. Das im ersten Verfahrensschritt gebildete Polypropylen-Homopolymerisat wird abgetrennt und in den zweiten Reaktor geschleust, wo sich nach Zugabe von Propylen und Ethylen durch Gasphasen-polymerisation das entsprechende Copolymerisat als dispers verteilte Phase bildet.

Zur Regelung der Molmassen wird dem Reaktionssystem Wasserstoff zugesetzt Während der Polymerisation sind nachstehende Betriebsbedingungen anzuwenden:

| Polymerisationsstufe 1 | Temperatur 50 bis 90 °C, | bevorzugt 60 bis 80 °C, |
| | Druck 20 bis 50 bar, | bevorzugt 25 bis 40 bar. |
| Polymerisationsstufe 2 | Temperatur 40 bis 100 °C, | bevorzugt 60 bis 90 °C, |
| | Druck 5 bis 30 bar, | bevorzugt 10 bis 20 bar. |

Zur Herstellung der erfindungsgemäßen Formmassen wird ein stereospezifischer ZIEGLER-NATTA-Katalysator verwendet, der aus mehreren Bestandteilen besteht und üblicherweise neben einer titanhaltigen Feststoff-Komponente noch eine Aluminium-alkyl-verbindung sowie eine externe Elektronendonorverbindung enthält.

Feinteilige Aluminiumoxide, Siliciumoxide oder Magnesiumchloride mit hohen spezifischen Oberflächen dienen als Trägermaterial für die aufgebrachten Titanhalogenide, bevorzugt Titantetrachlorid, und Elektronendonatoren, beispielsweise Ether. Ketone, Lactone. Alkohole, mono- oder polyfunktionelle Carbonsäuren und deren Ester, vorzugsweise Phthalsäurederivate. Die titanhaltige Feststoff-Komponente ist handelsüblich und wird nach in der Literatur bekannten Methoden hergestellt (z.B. DE 43 30 661/EP 0 573 862/WO 96/11216/GALLI, Macromol. Symp. 112, 1 - 16 (1996)).

Als Cokatalysatoren eignen sich besonders Trialkylaluminium-Verbindungen, beispielsweise Triethylaluminium. Außerdem enthält das Katalysatorsystem noch externe Elektronendonatoren, insbesondere substituierte Silane, bevorzugt Cyclohexyl-methyl-dimethoxysilan oder Dicyclopentyl-dimethoxysilan.

Die Kunststoffrohre stellt man in an sich bekannter Weise durch Extrusion aus den thermoplastischen Formmassen her. Dazu wird das in der beschriebenen Weise erhaltene Polypropylen-Polymerisat in einem Extruder bei Temperaturen von etwa 200 bis 260 °C aufgeschmolzen, homogenisiert, durch eine ringförmige Düse ausgepreßt und anschließend durch Abkühlung formstabil gemacht.

Die Fertigung der Rohre erfolgt üblicherweise kontinuierlich unter Verwendung konventioneller Einschnekkenextruder, ausgerüstet mit glatter Einzugszone für das zu verarbeitende Rohrmaterial. Zur Erhöhung des Massedurchsatzes kann letztere gegen eine Einzugszone mit axial eingearbeiteten Längsnuten ausgetauscht werden. Extruder dieser Bauart werden mit Dreizonenschnecken der Länge 20 bis 30 D (D = Durchmesser) bestückt, deren aufgabenbezogenes Schneckenprofil eine optimale Plastifizierung, Homogenisierung und Förderung der Polymerschmelze ermöglicht.

Am Extruderausgang ist ein Rohrkopf-Werkzeug angebaut, in dem der Schmelzestrom mittels eines konisch geformten Dorns oder eines Wendeiverteilers zur ringförmigen Düse geleitet wird. Eingebaute Lochscheiben und stegförmige Dornhalter korrigieren den Schmelzfluß im Sinne eines gleichmäßigen Druckaufbaus über den gesamten Düsenquerschnitt. Nach Verlassen des Rohrwerkzeuges durchläuft die Schmelze eine Kalibriereinrichtung, in der sie mittels Vakuum und/oder Druckluft an die Innenwand der Kalibrierkammer angepreßt wird, wobei durch rasche Abkühlung die Schmelze erstarrt und eine Formstabilisierung bei den vorgegebenen Abmessungen erfolgt. Im anschließenden Wasserbad mit einer Temperatur von 5 bis 30 °C und ausreichender Länge verfestigt sich der Rohrstrang weiter, so daß er danach in spezifizierte Rohrlängen zersägt werden kann.

Industrielle Rohrfertigungsanlagen bestehen aus den Maschineneinheiten Extruder mit Rohrkopf-Werkzeug, Kalibrierung, Wasserbad, Rohrabzug, Rohrsäge und Kipprinne.

Die erfindungsgemäßen Rohre haben höhere Werte für Zug-E-Modul, Kerbschlagzähigkeit und Ringsteifigkeit. Auf Grund der den Rohren eigenen hohen Steifigkeit und Zähigkeit reduziert sich der Materialeinsatz gegenüber vergleichbaren Rohrlängen aus den bisher eingesetzten polymeren Werkstoffen, wodurch die Wirtschaftlichkeit sehr positiv beeinflußt wird. Außerdem ermöglichen geringere Wanddicken höhere Kühlund Abzugsgeschwindigkeiten während der Formgebung, so daß der Extrusionsprozeß effektiver gestaltet werden kann.

Die Polypropylenrohre sind geeignet in Abwassersystemen, insbesondere als Kanalrohre, Regenwasserrohre, Hausabflußrohre, Schallschutzrohre oder als Schachtelemente.

## Ausführungsbeispiele 1 bis 5

A) Prozeßbeschreibung für die Beispiele 1 bis 3

Die Herstellung der erfindungsgemäßen Formmasse aus Propylen und Ethylen erfolgt kontinuierlich in zwei Polymerisationsschritten.

Dafür dienen zwei in Reihe geschaltete Polymerisationsreaktoren, die mit den üblichen Meßeinrichtungen sowie der Möglichkeit des gegenseitigen Produkttransfers ausgerüstet sind. Während des Polymerisationsverlaufs werden die für beide Polymerisationsstufen vorgegebenen Temperaturen, Drücke und Monomerverhältnisse konstant gehalten. Der zudosierte Wasserstoff wirkt als Molmassen-Regler. Gaschromatographische Messungen überwachen die Zusammensetzung des aus Propylen, Ethylen und Wasserstoff bestehenden Reaktionsgases und sichern durch kontinuierliche Nachspeisungen die rezepturgemäßen Konzentrationsverhältnisse.

Als Katalysatorkomponente wird ein kommerziell erhältlicher, geträgerter ZIEGLER-NATTA-Katalysator eingesetzt, der zur Herstellung von Polypropylen in Monomersuspension und Gasphase geeignet ist.

Dem ersten Reaktor ist eine Prepolymerisation vorgeschaltet, die in einem separaten Prepolymerisationsreaktor in flüssiger Propylenphase bei 15 bis 20 °C während 2 bis 3 Minuten abläuft, nachdem vorher feste Katalysatorkomponente, Cokatalysator Triethylaluminium (TEAL) und externer Elektronendonator Cyclohexyl-methyl-dimethoxysilan (CMDMS) bzw. Dicyclopentyl-dimethoxysilan (DPDMS) einzeln oder als Gemisch zugegeben worden sind.

Das entstandende Prepolymer wird in einem LOOP-Reaktor überführt, wo es in einem Überschuß an flüssigem Propylen die Polymerisation unter Bildung von Polypropylen-Homopolymerisat auslöst. Der Reaktorinhalt wird kontinuierlich in einen Zwischenbehälter ausgeschleust, in dem Polypropylen und nicht umgesetztes Propylen durch Abdampfen des Monomeren voneinander getrennt werden. Danach erfolgt der Transfer des Polypropylen-Homopolymers in den zweiten Reaktor, in dem sich nach Einleitung einer Propylen-Ethylen-Mischung durch Gasphasen-Polymerisation das entsprechende Copolymerisat als dispers verteilte Phase bildet.

Das in der beschriebenen Weise hergestellte Polypropylen-Polymerisat wurde in einem Einschnecken-Extruder (L/D = 30. D = 70 mm) bei 220 °C plastifiziert, durch eine ringförmige Düse (Außendurchmesser 110 mm) mit Dorn gepreßt und danach mittels Vakuum zu einem Rohr von 110 mm Außendurchmesser sowie 3.7 mm Wanddicke kalibriert, Es folgten in der bekannten Weise weitere Abkühlung im Wasserbad, Rohrabzug und Zersägen des Rohres. Wesentliche Betriebsbedingungen des Maschinensystems:

| Extruder-Temperaturen: | |
|---|---|
| Einzugszone 1 bis 3 | 200/210/220 °C |
| Ausstoßzone | 220 °C |

(fortgesetzt)

| Extruder-Temperaturen: | |
|---|---|
| Ringdüse | 200 °C |
| | - Schneckendrehzahl 40/min |
| | - Wasserbad Länge 4 m/Temperatur: 20 °C |
| | - Vakuum/Kalibrierung 200 Torr |
| | - Abzugsgeschwindigkeit 0.3 m/min |

B) Spezifische Verfahrensbedingungen für die Beispiele 1 bis 3

Aus Tabelle 1 sind die angewandten Synthesebedingungen, Monomerverhältnisse sowie polymeranalytische Produkteigenschaften, geordnet nach Polymerstufen und Beispielen, zu ersehen.

C) Ergebnisse der Beispiele 1 bis 3 und der Vergleichsbeispiele 4 und 5

Tabelle 2 zeigt charakteristische, die erfindungsgemäße Lösung stützende Werkstoff-Kennwerte der Beispiele 1 bis 3 sowie entsprechende Vergleichswerte von Daplen PP BEC5012 und Daplen HDPE CE4664, die als handelsübliche Rohrmaterialien dem aktuellen Stand der Technik entsprechen.
Aus der Gegenüberstellung treten die vorteilhaften anwendungstechnischen Eigenschaften der erfindungsgemäß hergestellten Produkte sowie der daraus gefertigten Rohre deutlich hervor.

D) Die Bestimmung der Produkt-und Formteileigenschaften nach den Beispielen 1 bis 5 erfolgte mit folgenden Methoden:

- Schmelzindex MFR        ISO 1133/Temperatur 230 °C/Nominallast 2,16 kg
- Ethylen-Gehalt        Infrarotspektroskopische Messung
- intrinsische Viskosität        Bestimmung in Dekalin bei 135 °C
- Dekadendregularität        Infrarotspektroskopische Bestimmung
- Zug-E-Modul        ISO 527/Temperatur 23 °C
- Kerbschlagzähigkeit        ISO 179/1 eA/Temperatur 23 °C
- Ringsteifigkeit        ISO 9969/Temperatur 23 °C
- Widerstand gegen äußere
  Schlagbeanspruchung

    a) EN 744/Umfangsverfahren/Temperatur 0 °C
    b) EN 1411/Stufenverfahren/Temperatur - 20 °C

- Wärmeformbeständigkeit

    a) VICAT - Erweichungstemperatur VST/B/50/ISO 306
    b) Formbestandigkeitsdtemperatur HDT/B/ISO 75

- Dichte        ISO 1183/Temperatur 23 °C
- Prüfkörperherstellung        Das nach dem beschriebenen Polymerisationsverfahren erhaltene Polypropylen-Pulver wurde in einem Labor-Doppel-schneckenextruder bei 240 °C stabilisiert und granuliert. Die Prüfkörper-Herstellung erfolgte durch Spritzgußverarbeitung bei 230 bis 260 °C. Vor der Kennwertermittlung sind die Prüfkörper gemäß den jeweiligen Vorschriften konditioniert worden.

## Tabelle 1

| Parameter | Einheit | Beispiel 1 | Beispiel 2 | Beispiel 3 |
|---|---|---|---|---|
| **1. Reaktor** | | | | |
| Druck | bar | 33 | 33 | 33 |
| Temperatur | °C | 70 | 70 | 70 |
| Wasserstoff | ppm | 270 | 270 | 270 |
| TEAL/Silan | mol/mol | 2 | 2 | 2 |
| **2. Reaktor** | | | | |
| Druck | bar | 12,0 | 12,5 | 12,0 |
| Temperatur | °C | 65 | 65 | 65 |
| $C_2 / (C_2 + C_3)$ | mol% | 0,45 | 0,45 | 0,44 |
| $H_2/C_2$ | mol% | 0,035 | 0,033 | 0,038 |
| **Formmasse** | | | | |
| MFR (230 °C/2,16 kp) | g/10min | 0,20 | 0,18 | 0,17 |
| Ethylengehalt | mol% | 19,5 | 14,5 | 5,6 |
| Intrinsische Viskosität B/A | dl/g | 1,50 | 1,24 | 1,16 |
| Dekadenregularität | % | 98 | 98 | 98 |

## Tabelle 2

| Kennwerte | Einheit | Prüfnorm | Parameter | Beispiel 1 | Beispiel 2 | Beispiel 3 | Beispiel 4 Vergleich zu Daplen PP BEC 5012 nat. | Beispiel 5 Vergleich zu Daplen HDPE CE 4664 nat. |
|---|---|---|---|---|---|---|---|---|
| Zug E-Modul | $N/mm^2$ | ISO 527 | 23 °C | 1524 | 1696 | 1972 | 1200 | 920 |
| Kerbschlagzähigkeit | $kJ/m^2$ | ISO 179/1eA | 23 °C | 104 | 102 | 80 | 52 | 14 |
| Ringsteifigkeit [1] | $kN/m^2$ | ISO 9969 | 23 °C | 5,8 | 6,2 | 6,8 | 4,0 | 3,5 |
| Widerstand gegen Äußere Schlagbean-Spruchung | - | EN 744 und EN 1411 | 0°C/1,6 kg/2000 mm  -20°C/4 kg/1000 mm | kein Bruch  kein Bruch | kein Bruch  kein Bruch | kein Bruch  kein Bruch | kein Bruch  kein Bruch | -  - |
| Wärmeformbe-Ständigkeit | °C | ISO 75 [2]  ISO 306 [3] | - | 81  70 | 85  75 | 98  87 | 78  70 | 72  65 |
| Einsatztemperatur | °C | - | - | -20 bis+90 | -20 bis +90 | -20 bis +90 | -20 bis +90 | -20 bis +60 |
| Dichte | $kg/m^3$ | ISO 1183 | 23 °C | 905 | 905 | 905 | 905 | 945 |
| Rohrgewicht [4] | kg/m | - | - | 1,15 | 1,13 | 1,10 | 1,29 | 1,42 |

1) Rohraußendurchmesser: 110 mm, Rohrwanddicke: 3,7 mm
2) HDT/B
3) Vicat B
4) Bei gleichem Rohraußendurchmesser 110 mm und gleicher Ringsteifigkeit

EP 1 042 629 B1

**Patentansprüche**

1.  Polypropylenformmasse zur Extrusion von Rohren mit hohem Zug-E-Modul, hoher Steifigkeit und Zähigkeit, die aus zwei Komponenten A und B der Zusammensetzung

    A) 80 bis 98 Masseteile, bevorzugt 87 bis 97 Masseteile, eines isotaktischen Polypropylen-Homopolymerisates als kohärente Matrixkomponente mit einer Dekadenregularität von > 95 % und

    B) 2 bis 20 Masseteile, bevorzugt 3 bis 13 Masseteile, eines Copolymerisats, bestehend aus 50 bis 70 Masseteilen Propylen und 30 bis 50 Masseteilen Ethylen und/oder weiterer C4 - C8 - $\alpha$-Olefine als dispers verteilte Elastkomponente

    mit einem Verhältnis der intrinsischen Viskositäten beider Komponenten B/A von 0.9 bis 1.5 besteht, einen Zug-E-Modul von 1300 bis 2300 N/mm$^3$, bevorzugt 1500 bis 2000 N/mm$^2$ und eine Kerbschlagzähigkeit von 60 bis 110 kJ/m$^2$, bevorzugt 70 bis 100 kJ/m$^2$ sowie einen Schmelzindex der Formmasse von 0.15 bis 0.8 g/10 min, bevorzugt 0.2 bis 0.5 g/10 min. aufweist.

2.  Polypropylenformmasse nach Anspruch 1, **dadurch gekennzeichnet, dass** sie 0.01 bis 2.0 Masse % eines Nukleiermittels enthält.

3.  Verfahren zur Herstellung der Polypropylenformmasse nach Anspruch 1, die in einem zweistufigen Polymerisationsverfahren unter Verwendung stereospezifischer ZIEGLER-NATTA-Katalysatoren und Zudosierung von Wasserstoff und unter Vorschaltung einer Prepolymerisation

    A) durch Polymerisation des Propylens bei Temperaturen von 50 bis 90 °C und Drucken von 30 bis 50 bar und

    B) durch Polymerisation des Gemisches aus diesen Polypropylen-Homopolymerisaten und neu zugesetztem Propylen und Ethylen und/oder weiterer C$_4$-C$_8$-$\alpha$-Olefinen bei Temperaturen von 40 bis 100 °C und Drücken von 5 bis 30 bar

    hergestellt wird.

4.  Polypropylenrohr, hergestellt durch Extrusion einer Polypropylenformmasse nach Anspruch 1, **dadurch gekennzeichnet, dass** die Ringsteifigkeit SN [kN/m$^2$] der Vollwandrohre mit glattwandiger Innen- und Aussenoberfläche mit einem Aussendurchmesser von $\geq$ 20 mm bis zu einem Aussendurchmesser von $\leq$ 2000 mm die mathernatische Beziehung

    $$190 \text{ kN/m}^2 \cdot (10/(SDR-1))^3 \geq SN \geq 110 \text{ kN/m}^2 \cdot (10/(SDR-1))^3$$

    vorzugsweise für die Zahlenwerte 162 und 137 kN/m$^2$
    (anstelle 190 und 110 kN/m$^2$)
    erfüllt, wobei SDR das Verhältnis von Aussendurchmesser zur Wanddicke darstellt.

5.  Polypropylenrohr nach Anspruch 4, **dadurch gekennzeichnet, dass** die Ringsteifigkeit SN [kN/m2] der Rohre mit einem Aussendurchmesser $\geq$ 40 mm bis zu einem Aussendurchmesser von $\leq$ 4000 mm die mathematische Beziehung

    $$2.3 \cdot 10^6 \text{ KN/m}^2 \cdot W \geq SN \geq 1.3 \cdot 10^6 \text{ kN/m}^2 \cdot W$$

    vorzugsweise für die Zahlenwerte 1,95 und 1,65. 106 kN/m$^2$
    (anstelle 2.3 und 1.3. 10$^6$ kN/m$^2$)
    erfüllt, wobei W das Verhältnis des längenbezogenen Flächenträgheitsmomentes der Rohrwandung zur dritten Potenz des Schwerpunktdurchmessers darstellt

6.  Polypropylenrohr nach einem der Ansprüche 4 oder 5, **dadurch gekennzeichnet, dass** bei der Messung des Widerstands gegen äussere Schlagbeanspruchung unter Standard-Bedingungen "kein Bruch" auftritt.

7. Verwendung der Polypropylenrohre nach einem oder mehreren der Ansprüche 4 bis 6 in Abwasserrohrsystemen, als Kanalrohre, Regenwasserrohre, Hausabflussrohre, Schallschutzrohre oder als Schachtelemente.

**Claims**

1. A polypropylene molding compound for extruding pipes with a high modulus of elasticity in tension, high stiffness and toughness that consists of two components A and B of the following composition:

   A) 80 to 98 parts by weight, preferably 87 to 97 parts by weight, of an isotactic polypropylene homopolymer as a coherent matrix component with a decimal regularity >95% and

   B) 2 to 20 parts by weight, preferably 3 to 13 parts by weight, of a copolymer consisting of 50 to 70 parts by weight of propylene and 30 to 50 parts by weight of ethylene and/or other $C_4$-$C_8$-$\alpha$-olefins as a dispersedly distributed elastomeric component,

   the two components B/A having an intrinsic viscosity ratio of 0.9 to 1.5, a modulus of elasticity in tension in the range from 1300 to 2300 N/mm$^2$, preferably from 1500 to 2000 N/mm$^2$, a notched impact strength from 60 to 110 kJ/m$^2$, preferably from 70 to 100 kJ/m$^2$, and the molding compound having a melt-flow index in the range from 0.15 to 0.8 g/10 min, preferably from 0.2 to 0.5 g/10 min.

2. The polypropylene molding compound according to claim 1, **characterized in that** it contains 0.01 to 2.0 percent by weight of a nucleation agent.

3. A method of producing the polypropylene molding compound according to claim 1 involving a two-step polymerization process using stereospecific ZIEGLER-NATTA catalysts while adding hydrogen following a prepolymerization step

   A) by polymerization of the propylene at temperatures from 50 to 90°C and pressures from 30 to 50 bar, and
   B) by polymerization of the mixture of these polypropylene homopolymers and newly added propylene and ethylene and/or other $C_4$-$C_8$-$\alpha$-olefins at temperatures from 40 to 100°C and pressures from 5 to 30 bar.

4. A polypropylene pipe produced by extrusion of a polypropylene molding compound according to claim 1, **characterized in that** the annular stiffness SN [in kN/m$^2$] of the solid pipe with smooth inner and outer surfaces and an outer diameter in the range from ≥20 mm to ≤2000 mm meets the following mathematical relationship:

$$190 \text{ kN/m}^2 \text{ x } (10/ (SDR\text{-}1))^3 \geq SN \geq 110 \text{ kN/m}^2 \text{ x } (10/ (SDR\text{-}1))^3,$$

   preferably for the numeric values 162 and 137 kN/m$^2$
   (instead of 190 and 110 kN/m$^2$),
   wherein SDR represents the ratio of outer diameter to wall thickness.

5. The polypropylene pipe according to claim 4, **characterized in that** the annular stiffness SN [in kN/m$^2$] of the pipes with an outer diameter in the range from ≥40 mm to ≤4000 mm meets the following mathematical relationship:

$$2.3 \text{ x } 10^6 \text{ kN/m}^2 \text{ x } W \geq SN \geq 1.3 \text{ x } 10^6 \text{ kN/m}^2 \text{ x } W,$$

   preferably for the numeric values 1.95 and 1.65 x 10$^6$ kN/m$^2$
   (instead of 2.3 and 1.3 x 10$^6$ kN/m$^2$),
   wherein W represents the ratio of the geometrical moment of inertia per unit length of the pipe wall to the third power of the center-of-gravity diameter.

6. The propylene pipe according to any one of claims 4 or 5, **characterized in that** no fracture occurs when measuring resistance to impact stress under standard conditions.

7. Use of the polypropylene pipes according to one or several of the preceding claims 4 to 6 in sewage systems, as sewage pipes, storm water pipes, houshold drain pipes, sound proofing pipes, or shaft components.

**Revendications**

1.  Matière à former en polypropylène pour l'extrusion de tubes avec haut module d'élasticité à la traction, avec haute rigidité et haute ténacité, qui comprend deux composantes A et B de la composition :

    A) 80 à 98 parts de masse, de préférence 87 à 97 parts de masse d'un homopolymère de polypropylène isotactique à titre de composante de matrice cohérente d'une régularité décimale > 95 %, et
    B) 2 à 20 parts de masse, de préférence 3 à 13 parts de masse d'un copolymère, constitué par 50 à 70 parts de masse de propylène et de 30 à 50 parts de masse d'éthylène et/ou d'autres oléfines $\alpha$ $C_4$- $C_8$ à titre de composante élastique répartie de façon dispersée,

    avec un rapport des viscosités intrinsèques des deux composantes B/A de 0,9 à 1,5, un module d'élasticité à la traction de 1300 à 2300 N/mm$^2$, de préférence de 1500 à 2000 N/mm$^2$ et une valeur de résilience de 60 à 110 kJ/ m$^2$, de préférence de 70 à 100 kJ/m$^2$, et un indice de fusion de la matière à former de 0,15 à 0,8 g/10 min, de préférence de 0,2 à 0,5 g/10 min.

2.  Matière à former en polypropylène selon la revendication 1, **caractérisée en ce qu'**elle contient 0,01 à 2,0 % en masse d'un agent de nucléation.

3.  Procédé pour réaliser une matière à former en polypropylène selon la revendication 1, qui est réalisée dans un procédé de polymérisation en deux étapes en utilisant des catalyseurs stéréospécifiques de ZIEGLER-NATTA et en ajoutant de façon dosée de l'hydrogène et en effectuant auparavant une pré-polymérisation

    A) par polymérisation du propylène à des températures de 50 à 90°C et à des pressions de 30 à 50 bar, et

    B) par polymérisation du mélange de ces homopolymères de polypropylène et de propylène et d'éthylène nouvellement ajoutés et/ou d'autres oléfines $\alpha$ $C_4$ - $C_8$ à des températures de 40 à 100°C et à des pressions de 5 à 30 bar.

4.  Tube en polypropylène, réalisé par extrusion d'une matière à former en polypropylène selon la revendication 1, **caractérisé en ce que** la rigidité annulaire SN [kN/m$^2$] des tubes à paroi pleine de surface intérieure et extérieure lisses et d'un diamètre extérieur $\geq$ 20 mm jusqu'à un diamètre extérieur $\leq$ 2000 mm, satisfait la relation mathématique

    $$190 \text{ kN/m}^2 \cdot (10/ (SDR\text{-}1))^3 \geq SN \geq 110 \text{ kN/m}^2 \cdot (10/ (SDR\text{-}1))^3$$

    de préférence pour les valeurs numériques 162 et 137 kN/m$^2$
    (à la place de 190 et 110 kN/m$^2$)
    SDR représentant le rapport entre le diamètre extérieur et l'épaisseur de paroi.

5.  Tube en polypropylène selon la revendication 4, **caractérisé en ce que** la rigidité annulaire SN [kN/m$^2$] des tubes d'un diamètre extérieur $\geq$ 40 mm jusqu'à un diamètre extérieur $\leq$ 400 mm satisfait la relation mathématique

    $$2,3 \cdot 10^6 \text{ kN/m}^2 \cdot W \geq SN \geq 1,3 \cdot 10^6 \text{ kN/m}^2 \cdot W$$

    de préférence pour les valeurs numériques 1,95 et 1,65 $\cdot$ 10$^6$ kN/m$^2$
    (à la place de 2,3 et 1,3 $\cdot$ 10$^6$ kN/m$^2$)
    W représentant le rapport entre le couple d'inertie superficiel en longueur de la paroi de tube et la troisième puissance du diamètre de centre de gravité.

6.  Tube en polypropylène selon l'une ou l'autre des revendications 4 et 5, **caractérisé en ce que** lors de la mesure de la résistance contre les contraintes extérieures dues au choc dans des conditions standard, il ne se produit "aucune rupture".

7. Utilisation des tubes en polypropylène selon l'une ou plusieurs des revendications 4 à 6 dans des systèmes de tubes à eaux usées, à titre de tubes à égouts, de tubes à eaux pluviales, de tubes à eaux vannes, de tubes de protection sonore ou à titre d'éléments de puits.